# EUROPÄISCHE PATENTSCHRIFT

(11) **EP 1 159 657 B1**
(45) Veröffentlichungstag und Bekanntmachung des Hinweises auf die Patenterteilung: **20.08.2003**
(21) Anmeldenummer: 00915136.6
(22) Anmeldetag: 02.03.2000
(51) Int. Cl.: G05B 19/409, G05B 19/418, G05B 23/02

(54) **AUGMENTED-REALITY-SYSTEM MIT SPRACHBASIERTER ERFASSUNG VON INFORMATIONSDATEN, INSBESONDERE VON SERVICEBERICHTEN**
AUGMENTED REALITY SYSTEM HAVING VOICE-BASED RECORDING OF INFORMATION DATA, IN PARTICULAR, INFORMATION DATA CONTAINED IN SERVICE REPORTS
SYSTEME A REALITE AMPLIFIEE AVEC SAISIE VOCALE DE DONNEES D'INFORMATION, EN PARTICULIER DE RAPPORTS DE SERVICE

(30) Priorität: 02.03.1999 DE 19909154; 02.03.1999 DE 19909023; 02.03.1999 DE 19909018; 02.03.1999 DE 19909012; 02.03.1999 DE 19909011; 02.03.1999 DE 19909010; 02.03.1999 DE 19909013; 02.03.1999 DE 19909009; 02.03.1999 DE 19909016
(43) Veröffentlichungstag der Anmeldung: 05.12.2001
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: DE0000660
(87) Internationale Veröffentlichungsnummer: WO00052538

(56) Entgegenhaltungen:
- EP-A- 0 145 683
- EP-A- 0 597 127
- US-A- 5 198 983
- US-A- 5 712 649
- US-A- 5 745 387
- US-A- 5 748 495
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 1992, Seiten 533-540, XP000426833

## Beschreibung

Die Erfindung betrifft ein Augmented-Reality-System zur Übertragung von Informationsdaten von einem Anwender beispielsweise von einem Servicemann an ein Speichermedium des Augmented-Reality-Systems.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

In dem Fachartikel Daude R. et al: "Head-Mounted Display als facharbeiterorientierte Unterstützungskomponente an CNC-Werkzeugmaschinen", Werkstattstechnik, DE, Springer Verlag, Berlin, Bd. 86, Nr. 5, 1. Mai 1996, Seiten 248-252, XP000585192 ISSN: 0340-4544, wird mit dem Head-Mounted Display (HMD) eine Komponente zur Unterstützung des Facharbeiters beim Einrichten, Einfahren und Störungsmanagement bei der Fräsbearbeitung beschrieben. Die technische Anbindung des HMD an eine moderne NC-Steuerung wird erläutert und die Ergebnisse eines Laborversuchs mit dem HMD werden genannt.

Der Erfindung liegt die Aufgabe zugrunde, ein System und ein Verfahren anzugeben, das eine einfache und zuverlässige Erfassung und Speicherung von Informationsdaten, insbesondere von Serviceberichten ermöglicht.

Diese Aufgabe wird durch ein System sowie ein Verfahren mit den in den Ansprüchen 1 bzw. 9 angegebenen Merkmalen gelöst.

Der Erfindung liegt die Erkenntnis zugrunde, dass einfach ausgebildetes Servicepersonal oft nur bedingt in der Lage ist, einen Serviceeinsatz schriftlich zu dokumentieren. Dies hat zur Folge, dass für künftige Einsatzfälle keine zuverlässige Information zur Verfügung steht. Durch die sprachbasierte Erfassung der Serviceberichte ggf. auch in Verbindung mit Informationsdaten, d.h. Dokumentationsdaten und/oder Prozessdaten einer automatisierungstechnisch gesteuerten Anlage ergibt sich eine einfache und zuverlässige Erfassung und Speicherung der Informationsdaten, insbesondere der Serviceberichte. Die Speicherung und Zuordnung der Serviceberichte kann.dabei sprachgesteuert oder durch die sonstigen Erfassungsmittel wie Bilderfassungsmittel gesteuert, d.h. kontextabhängig einer durch die jeweils von den Erfassungsmitteln ermittelten aktuellen Arbeitssituation erfolgen. Bei der Erfassung der Einsatzberichte können neben der reinen sprachbasierten Erfassung auch weitere Daten, wie Prozesswerte, Signalwerte, Videobilder miterfasst werden. Das Augmented-Reality-System kann dem Servicetechniker vor Ort, der vor eine bestimmte Aufgabe gestellt ist, abhängig von der Problemstellung geeignete frühere gespeicherte Serviceprotokolle in Form von Audio- und/oder Bilddaten zugänglich machen, so dass der Servicetechniker auf einfache Weise von bereits früher auch von Kollegen erfassten Serviceeinsätzen profitiert und nur in Ausnahmefällen der Einsatz eines Experten erforderlich wird.

Vorteilhafte Ausgestaltungen bestehen darin, dass die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozesswerte wie Temperatur, Druck, Signale etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Augmented-Reality-Systems,
- FIG 2: ein weiteres Blockschaltbild eines Ausführungsbeispiels eines Augmented-Reality-Systems und
- FIG 3: ein Anwendungsbeispiel für einen situationsgerechten Zugriff auf Expertenwissen und/oder Dokumentationsdaten.

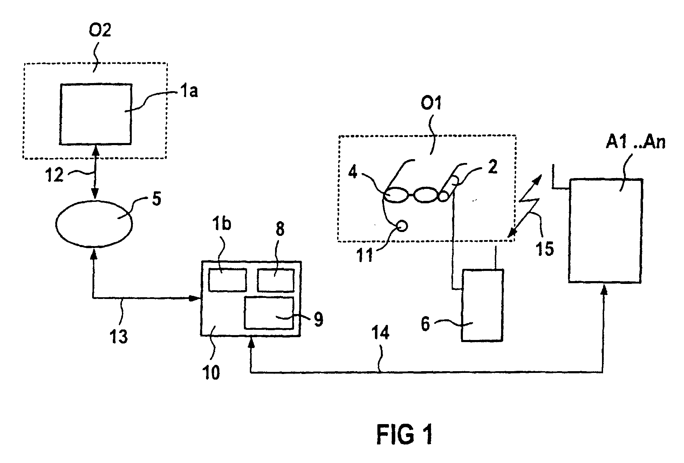

Figur 1 zeigt eine Prinzipdarstellung eines Augmented-Reality-Systems Augmented-Reality-System zur Übertragung von Informationsdaten von einem Anwender, insbesondere eines automatisierungstechnisch gesteuerten Prozesses, einer Produktionsanlage und/oder einer Maschine, beispielsweise von einem Servicemann an ein Speichermedium des Augmented-Reality-Systems. Das Augmented-Reality-System weist Erfassungsmittel 11 zur Erfassung von Spracheingaben des Anwenders 7 auf. Derartige Spracheingaben umfassen insbesondere Serviceprotokolle durch eine sprachbasierte Eingabe. Hierzu ist der Anwender, der in Figur 1 nicht explizit dargestellt ist, mit mobilen Geräten 4, 6 ausgestattet. Die mobilen Geräte 4, 6 beinhalten eine Datenbrille 4, an der eine Videokamera 2 sowie ein Mikrofon 11 angeordnet ist. Die Datenbrille ist mit einer Einrichtung zur drahtlosen Kommunikation, beispielsweise einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung bzw. zum Zugriff von bzw. auf Informationsdaten, ein AR-Basismodul 8 sowie ein AR-Anwendungsmodul 9. Bei einer vorteilhaften Ausgestaltungsform ist das AR-System 10 über eine Datenverbindung 13 mit dem einem Datennetz beispielsweise mit dem Internet 5 verbindbar, wobei über eine beispielhaft dargestellte Internetverbindung 12 ein Zugriff auf Speicher- und Dokumentationsdaten 1a möglich ist. Ebenso ist am zweiten Ort 02 eine Speicherung der Sprach- und/oder sonstigen Daten des Anwenders möglich.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlagen A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b, beispielsweise früheren bereits erfaßten Serviceberichten hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Informationsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Handheld-PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

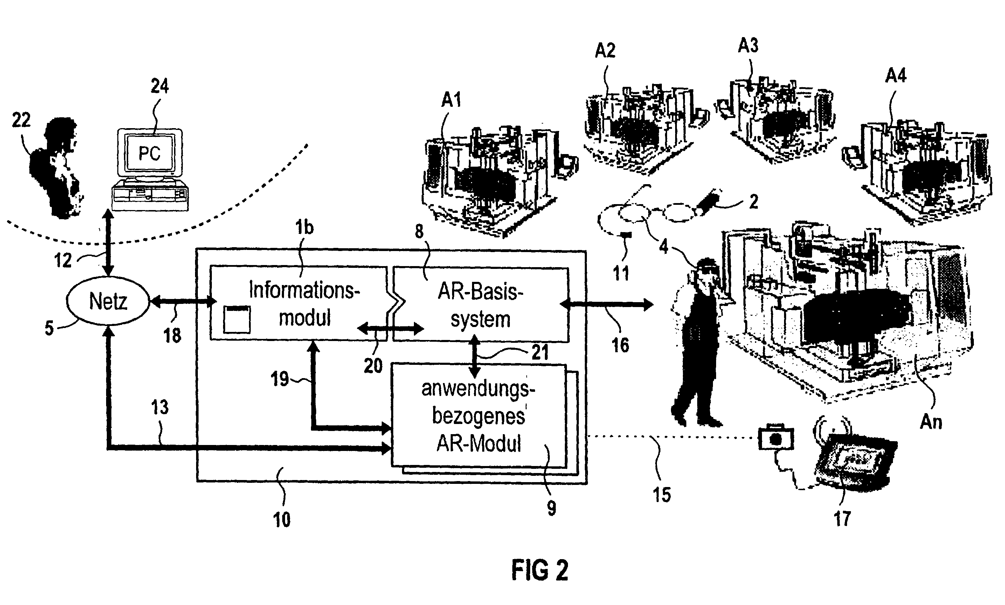

Figur 2 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Serviceoder Wartungsarbeiten durchführen.

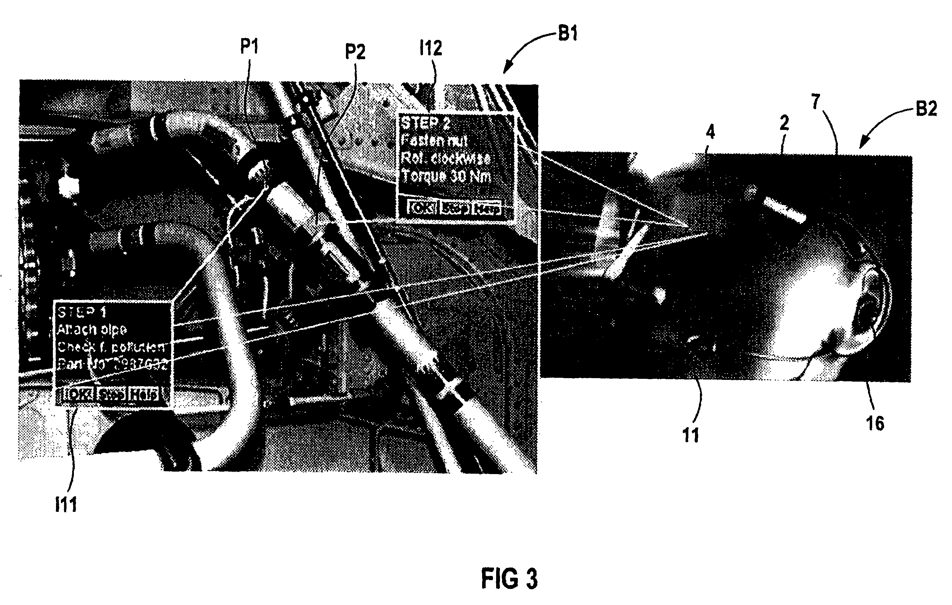

Mit Hilfe der Datenbrille 4 und der entsprechenden Funk-Sende-Empfangsvorrichtungen, beispielsweise der Funk-Sende-Empfangsvorrichtung 17, die vom Personal direkt am Körper getragen wird, ist es möglich vorbeugende Funktionalität zu erreichen: Zunächst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

Figur 3 zeigt ein Anwendungsbeispiel für einen situationsgerechten Zugriff auf Dokumentationsdaten. Figur 3 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Datenbrille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist-, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern. Derartige Zusatzinformationen können bei der Erstellung von Serviceprotokollen durch den-Servicetechniker sprachgesteuert in das AR-System in einen Servicebericht eingebettet werden. Hierdurch kann bei einem erneuten Fehler eine früher erfolgte Wartung bzw. ein früher erfolgter Serviceeinsatz exakt nachvollzogen werden. Die Analyse der auf diese Weise erfaßten Serviceprotokolle führt zu einer besseren Erkennung von Qualitätsmängeln einer Anlage und/oder eines automatisierungstechnisch gesteuerten Prozesses.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird.

Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen ARgestützt zu kooperieren.

Augmented Reality wird erst seit wenigen Jahren intensiv erforscht. Deshalb finden sich sowohl auf nationaler-als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die im Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

Zusammenfassend betrifft die Erfindung somit ein Augmented-Reality-System und- verfahren zur Übertragung von Informationsdaten von einem Anwender insbesondere eines automatisierungstechnisch gesteuerten Prozesses, einer Produktionsanlage und/oder einer Maschine, beispielsweise von einem Servicemann an ein Speichermedium des Augmented-Reality-Systems, wobei das Augmented-Reality-System Erfassungsmittel zur Erfassung von Spracheingaben des Anwenders, insbesondere von Serviceprotokollen, durch eine sprachbasierte Eingabe aufweisen. Hierdurch können Serviceprotokolle auf einfache Weise schnell erstellt, zentral gespeichert und archiviert werden, so daß auch im bei späteren ähnlichen Einsatzfällen die entsprechende Information zuverlässig zur Verfügung steht. Das Verfahren ermöglicht eine sprachbasierte Erfassung von Einsatzberichten, bei dem Serviceprotokolle etc. anstelle in schriftlicher Form als sprachbasierte Eingaben gespeichert und verwaltet werden.

## Patentansprüche

1. System zur Erfassung und Speicherung von Informationsdaten, wobei das System Erfassungsmittel (11) zur Erfassung eines Serviceberichts in Form von Spracheingaben eines Anwenders (7), Mittel zur Erfassung von Dokumentationsdaten und Prozessdaten einer automatisierungstechnisch gesteuerten Anlage und ein Speichermedium zur Speicherung der Spracheingaben, der Dokumentationsdaten und der Prozessdaten aufweist.

2. System nach Anspruch 1,
**dadurch gekennzeichnet,**
**dass** die Dokumentationsdaten und die Prozessdaten in Verbindung mit den Spracheingaben des Anwenders (7) erfasst werden.

3. System nach Anspruch 1 oder 2,
**dadurch gekennzeichnet,**
**dass** eine sprachgesteuerte Speicherung und Zuordnung der Serviceberichte vorgesehen ist.

4. System nach einem der vorhergehenden Ansprüche,
**dadurch gekennzeichnet,**
**dass** Erfassungsmittel (2) zur Ermittlung einer aktuellen Arbeitssituation vorgesehen sind und dass eine Speicherung und Zuordnung der Serviceberichte in Abhängigkeit der aktuellen Arbeitssituation vorgesehen ist.

5. System nach einem der vorhergehenden Ansprüche,
**dadurch gekennzeichnet,**
**dass** das System Visualisierungsmittel (4) zur Visualisierung von im System gespeicherten Informationsdaten aufweist.

6. System nach Anspruch 4 oder 5,
**dadurch gekennzeichnet,**
**dass** Mittel zur von der aktuellen Arbeitssituation abhängigen Darstellung der gespeicherten Informationsdaten vorgesehen sind.

7. System nach einem der vorhergehenden Ansprüche,
**dadurch gekennzeichnet**,
däss die Erfassungsmittel (2, 11) anwendergesteuert sind.

8. System nach einem der Ansprüche 5 bis 7,
**dadurch gekennzeichnet,**
**dass** die Visualisierungsmittel (4) als im Bereich *von* Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

9. Verfahren zur Erfassung und Speicherung von Informationsdaten, wobei mit Erfassungsmitteln (11) ein Servicebericht in Form von Spracheingaben eines Anwenders (7) erfasst wird, Dokumentationsdaten und Prozessdaten einer automatisierungstechnisch gesteuerten Anlage erfasst werden und die Spracheingaben, die Dokumentationsdaten und die Prozessdaten gespeichert werden.

10. Verfahren nach Anspruch 9,
**dadurch gekennzeichnet,**
**dass** die Dokumentationsdaten und die Prozessdaten in Verbindung mit den Spracheingaben des Anwenders (7) erfasst werden.

11. Verfahren nach Anspruch 9 oder 10,
**dadurch gekennzeichnet,**
**dass** eine sprachgesteuerte Speicherung und Zuordnung der Serviceberichte vorgesehen ist.

12. Verfahren nach einem der Ansprüche 9 bis 11,
**dadurch gekennzeichnet,**
**dass** mit Erfassungsmitteln (2) eine aktuelle Arbeitssituation ermittelt wird und dass eine Speicherung und Zuordnung der Serviceberichte in Abhängigkeit der aktuellen Arbeitssituation vorgesehen ist.

13. Verfahren nach einem der Ansprüche 9 bis 12,
**dadurch gekennzeichnet,**
**dass** im System gespeicherte Informationsdaten mit Visualisierungsmitteln (4) visualisiert werden.

14. Verfahren nach Anspruch 12 oder 13,
**dadurch gekennzeichnet,**
**dass** die gespeicherten Informationsdaten abhängig von der aktuellen Arbeitssituation dargestellt werden.

15. Verfahren nach einem der Ansprüche 9 bis 14,
**dadurch gekennzeichnet,**
**dass** die Erfassungsmittel (2, 11) anwendergesteuert sind.

16. Verfahren nach einem der Ansprüche 13 bis 15,
**dadurch gekennzeichnet,**
**dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

## Claims

1. System for recording and storing information data, the system having recording means (11) for recording a servicing report in the form of voice inputs by a user (7), means for recording documentation data and process data of a system controlled by automation technology and a storage medium for storing voice inputs, documentation data and process data.

2. System according to Claim 1, **characterised in that** the documentation data and the process data is recorded in conjunction with the voice inputs of the user (7).

3. System according to Claims 1 or 2, **characterised in that** voice-controlled storage and assignment of the servicing reports is provided.

4. System according to one of the preceding claims, **characterised in that** recording means (2) are provided for determining a current operating situation and that storage and assignment of the servicing reports dependent on the current operating situation is provided.

5. System according to one of the preceding claims, **characterised in that** the system has visualisation means (4) for visualising information data stored in the system.

6. System according to Claim 4 or 5, **characterised in that** means are provided for displaying the stored information data dependent on the current operating situation.

7. System according to one of the preceding claims, **characterised in that** the recording means (2, 11) are user-controlled.

8. System according to one of Claims 5 to 7, **characterised in that** the visualisation means (4) are formed as display apparatuses arranged in the area of goggle lenses of goggles, that an image-sensing apparatus arranged on the data goggles is provided as a recording means (2) and that a microphone (11) arranged on the data goggles is provided for recording voice commands.

9. Method for recording and storing information data, a servicing report being recorded in the form of voice inputs by a user (7) using recording means (11), documentation data and process data of a system controlled by automation technology being recorded and the voice inputs, documentation data and process data being stored.

10. Method according to Claim 9, **characterised in that** the documentation data and the process data is recorded in conjunction with the voice inputs of the user (7).

11. Method according to Claims 9 or 10, **characterised in that** voice-controlled storage and assignment of the servicing reports is provided.

12. Method according to one of Claims 9 to 11, **characterised in that** a current operating situation is determined using recording means (2) and that storage and assignment of the servicing reports dependent on the current operating situation is provided.

13. Method according to one of Claims 9 to 12, **characterised in that** information data stored in the system is visualised with visualisation means (4).

14. Method according to Claim 12 or 13, **characterised in that** the stored information data is displayed dependent on the current operating situation.

15. Method according to one of Claims 9 to 14, **characterised in that** the recording means (2, 11) are user-controlled.

16. Method according to one of Claims 13 to 15, **characterised in that** the visualisation means (4) are formed as display apparatuses arranged in the area of goggle lenses of goggles, that an image-sensing apparatus arranged on the data goggles is provided as recording means (2) and that a microphone (11) arranged on the data goggles is provided for recording voice commands.

## Revendications

1. Système d'acquisition et de mémorisation de données d'information, le système comportant des moyens d'acquisition (11) pour saisir un rapport de service sous la forme d'entrées vocales d'un utilisateur (7), des moyens pour saisir des données documentaires et des données de processus d'une installation à commande automatisée et un moyen de mémorisation pour mémoriser les entrées vocales, les données documentaires et les données de processus.

2. Système selon la revendication 1,
**caractérisé par le fait que** les données documentaires et les données de processus sont acquises en relation avec les entrées vocales de l'utilisateur (7).

3. Système selon la revendication 1 ou 2,
**caractérisé par le fait qu'**il est prévu une mémorisation et une coordination à commande vocale des rapports de service.

4. Système selon l'une des revendications précédentes,
**caractérisé par le fait qu'**il est prévu des moyens d'acquisition (2) pour déterminer une situation de travail actuelle ainsi qu'une mémorisation et une coordination des rapports de service en fonction de la situation de travail actuelle.

5. Système selon l'une des revendications précédentes,
**caractérisé par le fait que** le système comporte des moyens de visualisation (4) pour visualiser des données d'information mémorisées dans le système.

6. Système selon la revendication 4 ou 5,
**caractérisé par le fait qu'**il est prévu des moyens pour la représentation, en fonction de la situation de travail actuelle, des données d'information mémorisées.

7. Système selon l'une des revendications précédentes,
**caractérisé par le fait que** les moyens d'acquisition (2, 11) sont commandés par l'utilisateur.

8. Système selon l'une des revendications 5 à 7,
**caractérisé par le fait que** les moyens de visualisation (4) sont conçus comme des dispositifs d'affichage agencés dans la zone des verres de lunettes de données, qu'il est prévu comme moyen d'acquisition (2) un dispositif de détection d'image agencé sur les lunettes de données et qu'il est prévu un microphone (11) agencé sur les lunettes de données pour détecter des commandes vocales.

9. Procédé d'acquisition et de mémorisation de données d'information, un rapport de service étant saisi sous la forme d'entrées vocales d'un utilisateur (7) avec des moyens d'acquisition (11), des données documentaires et des données de processus d'une installation à commande automatisée étant saisies et les entrées vocales, les données documentaires et les données de processus étant mémorisées.

10. Procédé selon la revendication 9,
**caractérisé par le fait que** les données documentaires et les données de processus sont saisies en relation avec les entrées vocales de l'utilisateur (7).

11. Procédé selon la revendication 9 ou 10,
**caractérisé par le fait qu'**il est prévu une mémorisation et une coordination à commande vocale des rapports de service.

12. Procédé selon l'une des revendications 9 à 11,
**caractérisé par le fait qu'**une situation de travail actuelle est déterminée avec des moyens d'acquisition (2) et qu'il est prévu une mémorisation et une coordination des rapports de service en fonction de la situation de travail actuelle.

13. Procédé selon l'une des revendications 9 à 12,
**caractérisé par le fait que** des données d'information mémorisées dans le système sont visualisées avec des moyens de visualisation (4).

14. Procédé selon la revendication 12 ou 13,
**caractérisé par le fait que** les données d'information mémorisées sont représentées en fonction de la situation de travail actuelle.

15. Procédé selon l'une des revendications 9 à 14,
**caractérisé par le fait que** les moyens d'acquisition (2, 11) sont commandés par l'utilisateur.

16. Procédé selon l'une des revendications 13 à 15,
**caractérisé par le fait que** les moyens de visualisation (4) sont conçus comme des dispositifs d'affichage agencés dans la zone des verres de lunettes de données, qu'il est prévu comme moyen d'acquisition (2) un dispositif de détection d'image agencé sur les lunettes de données et qu'il est prévu un microphone (11) agencé sur les lunettes de données pour détecter des commandes vocales.
